# EUROPEAN PATENT APPLICATION

(11) **EP 2 187 600 A1**
(43) Date of publication of application: **19.05.2010**
(21) Application number: 09174126.4
(22) Date of filing: 27.10.2009
(51) Int. Cl.: H04M 1/02, H04M 1/725

(54) **Sliding-type portable terminal**

(30) Priority: 12.11.2008 KR 20080112247
(71) Applicant: SAMSUNG ELECTRONICS CO., LTD., Suwon-si, Gyeonggi-do (KR)
(72) Inventor: Jung, Ik-Su, Suwon-si, Gyeonggi-do (KR); Bae, Kwang-Jin, Suwon-si, Gyeonggi-do (KR); Lim, Dong-Eon, Suwon-si, Gyeonggi-do (KR)
(74) Representative: Ketelaars, Maarten F.J.M.

(57) **Abstract**

A sliding-type portable terminal includes a main body housing and a sliding housing being slidable while facing the main body housing. A clean back cover provided on the sliding housing and closely adhered to an inner side of the main body housing covers a rear plate of the sliding housing so that when the sliding housing is slid, the clean back cover is exposed to the outside to prevent contaminants and foreign materials from getting inside the portable terminal. Thereby, the external appearance of the portable terminal stays clean and a curvature according to the sliding of the sliding housing or the rear plate in which a guide groove is formed is not exposed to the outside along with a sense of unity. Foreign materials such as dust, etc. can be prevented from coming between the main body housing and the sliding housing or through the guide groove.

## Description

### BACKGROUND OF THE INVENTION

### 1. Field of the Invention

The present invention relates generally to a sliding-type portable terminal, and in particular, to a sliding-type portable terminal that can improve an aesthetic sense and a sense of unity of a sliding housing.

### 2. Description of the Related Art

In general, portable terminals are devices that provide users with a plurality of mobile communication functions, and are classified into a bar-type terminal, a flip-type terminal, a folder-type terminal, and a sliding-type terminal according to their basic appearance.

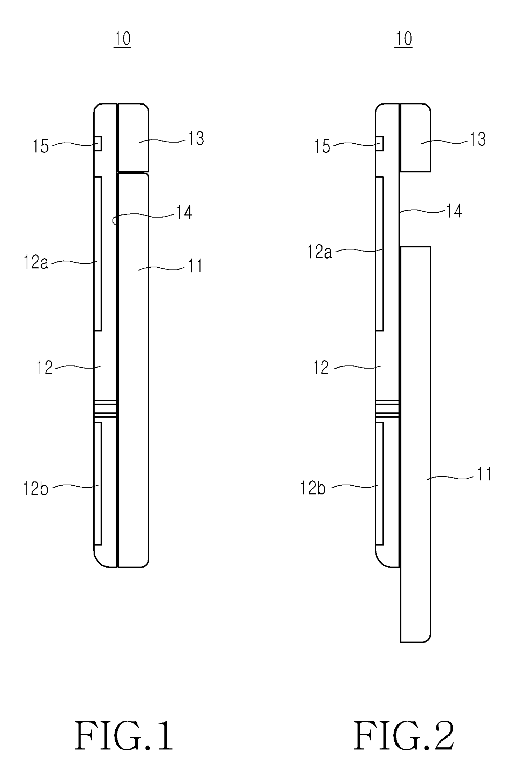

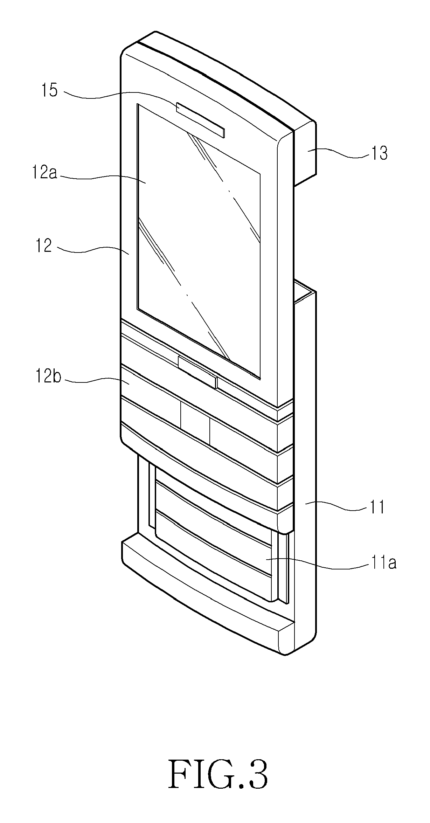

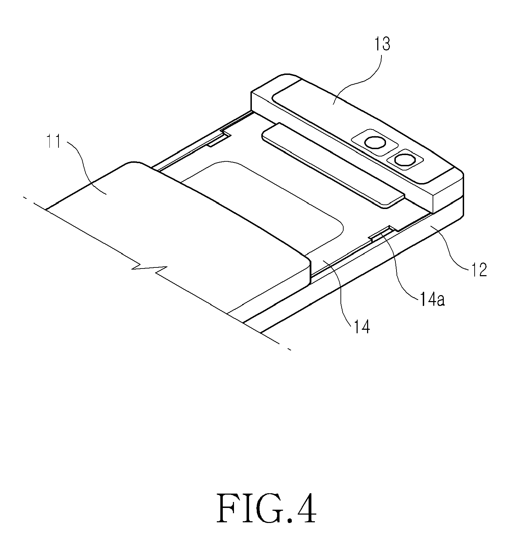

FIGs. 1 and 2 are respective side views of a conventional sliding-type portable terminal and a conventional sliding-type portable terminal in a state in which the sliding housing has been slid to an extended or open position, and FIGS. 3 and 4 are front-side and backside perspective views of the conventional sliding-type portable terminal of FIG. 2 in which the sliding housing has been slid to an extended or open position.

As illustrated in FIGs. 1 to 4, a conventional sliding-type portable terminal 10 includes a main body housing 11 and a sliding (i.e. slidable) housing 12 for sliding away from the main body housing 11. The sliding housing 12 includes a first surface that faces the main body housing 11. A sliding module for sliding the sliding housing 12 from the main body housing 11 is provided between the main body housing 11 and the sliding housing 12. As illustrated in FIG. 3, various buttons 11a, such as a number key, a character key, a menu key, and a touch key are provided on the front side of the main body housing 11, and an opening/closing operation is performed according to sliding of the sliding housing 12. An installation space of a battery pack (not shown) is formed in the backside of the main body housing 11 and the battery pack is mounted and covered with a battery pack cover. A front-side display 12a is provided on the front surface of the sliding housing 12. A menu key 12b is provided on a lower portion of the front side display 12a.

Still referring to FIGS. 3 and 4, a receiver 15, which has a speaker module (not shown) and receives a call, is provided on an upper portion of the sliding housing 12. The sliding-type portable terminal 10 may further include a camera lens module 13 provided on the backside of the sliding housing 12. In terms of a rear plate 14 of the sliding housing 12, the speaker module and the camera lens module 13 are provided on an upper portion of the sliding housing 12 and protruded to the backside of the sliding housing 12. A guide groove 14a can be coupled to a guide part (not shown) that is provided on an inner side of the main body housing 11 so that the sliding housing can be slid yet stay in contact to some degree with a portion of the main body housing 12.

As illustrated in FIG. 1, the camera lens module 13 protrudes from the upper portion of the backside of the sliding housing 12. When the main body housing 11 faces the sliding housing 12 in a closed or non-extended state, the camera lens module 13 faces the inside of the main body housing 11 is maintained. The camera lens module 13 is exposed to the outside according to opening/extending of the sliding housing 12. The rear plate is formed to have a curvature. When the rear plate is exposed to the outside, there is a problem in that a curved surface of the rear plate is directly exposed to the outside and also the guide groove on which the sliding housing slides from the main body housing is exposed to the outside/ambient conditions. Since a mounting space of the camera lens module is protruded to the backside of the sliding housing, the backside of the sliding housing exposed to the outside has a curved shape. Accordingly, there is a problem in that the aesthetic sense of the sliding-type portable terminal may be degraded. Since a space between the sliding housing and the main body housing is relatively wide, there is a problem in that foreign materials may easily come into the inside. Also, there is a problem in that dust may enter into the sliding housing or the main body housing through the exposed guide groove. A function of the sliding module may be degraded due to incoming foreign materials between the sliding housing and the main body housing, leading to a malfunction or failure of the device.

It is a recent trend that a structure of the sliding housing or the sliding module is prevented from being exposed to the outside so as to promote a sense of unity of the external appearance of a portable terminal. As illustrated in FIGS. 1 and 2, since the conventional sliding-type portable terminal has a problem in that the structure of the sliding housing or the sliding module and the curvature shape of the backside of the sliding housing are all exposed, and thus, the sense of unity of the portable terminal may be degraded, Also, the sense of unity of the sliding housing may be degraded.

Accordingly, there has been a long-felt need in the art for a sliding-type portable terminal, which can improve an aesthetic sense of the backside of a sliding housing to be open when the sliding housing is being slid open or closed (i.e. extended or retracted), and a sense of unity of the sliding housing.

Also, a need exists in the art for a sliding-type portable terminal, which by design can prevent foreign materials from coming into the interior of the portable terminal by reducing a width of a space between a sliding housing and a main body housing.

### SUMMARY OF THE INVENTION

An exemplary aspect of the present invention is to provide a sliding-type portable terminal that can improve an aesthetic sense and a sense of unity of a sliding housing by providing a clean back cover ("clean-back-cover") on the backside of the sliding housing so as to cover a rear plate of the sliding housing that is closely adhered to a main body housing without exposing the rear plate to the outside when the sliding housing is being slid from the main body housing.

According to an exemplary aspect of the present invention, there is provided a sliding-type portable terminal having a main body housing and a sliding housing making a sliding while facing the main body housing, including: a clean back cover provided on the sliding housing and closely adhered to an inner side of the main body housing, said clean back over for covering a rear plate of the sliding housing, the clean back cover being exposed to the outside when the sliding housing makes the sliding.

### BRIEF DESCRIPTION OF THE DRAWINGS

The above and other exemplary aspects, features and advantages of the present invention will become more apparent from the following detailed description when taken in conjunction with the accompanying drawings in which:
FIG. 1 is a side view of a conventional sliding-type portable terminal in a state in which a sliding housing faces a main body housing;
FIG. 2 is a side view of the conventional sliding-type portable terminal in a state in which the sliding housing makes a sliding from a main body housing;
FIG. 3 is a front-side perspective view of the conventional sliding-type portable terminal in a state in which the sliding housing is slid from the main body housing;
FIG. 4 is a backside perspective view of the conventional sliding-type portable terminal in a state in which the sliding housing is slid;
FIG. 5 is an exploded perspective view of a sliding-type portable terminal according to an exemplary embodiment of the present invention;
FIG. 6 is a perspective view of a clean back cover exposed to the outside when a sliding housing of the sliding-type portable terminal is being slid according to an exemplary embodiment of the present invention;
FIG. 7 is a view of the clean back cover of the sliding-type portable terminal according to an exemplary embodiment of the present invention;
FIG. 8 is a side section view of the sliding-type portable terminal in a state in which the sliding housing faces a main body housing according to an exemplary embodiment of the present invention; and
FIG. 9 is a side section view of the sliding-type portable terminal in a state in which the sliding housing is being slid according to an exemplary embodiment of the present invention.

Throughout the drawings, the same drawing reference numerals will be understood to refer to the same or like elements, features and structures.

### DETAILED DESCRIPTION

Exemplary embodiments of the present invention will now be described in detail with reference to the annexed drawings.

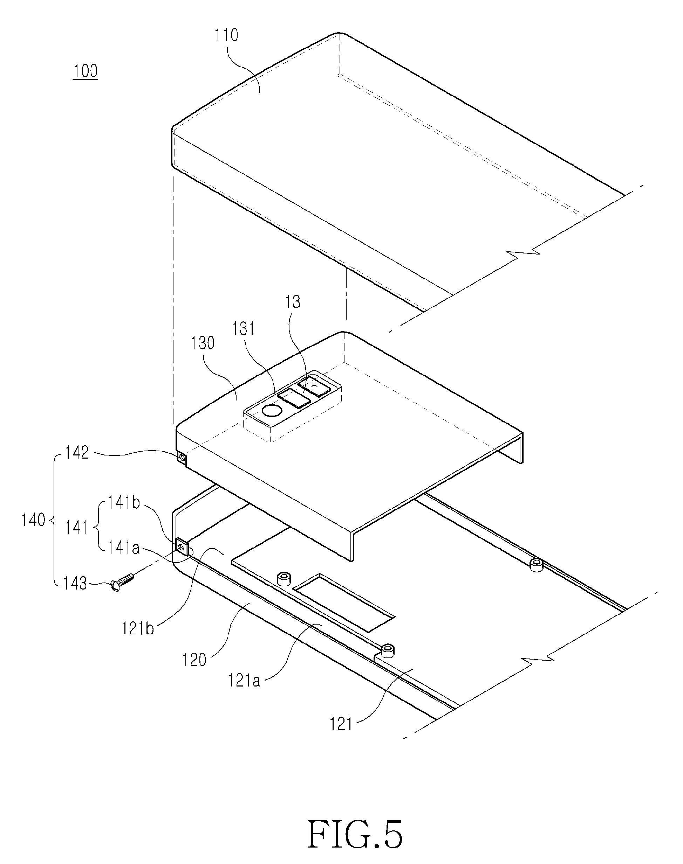

As now illustrated in FIGs. 5, 8, and 9, a sliding-type portable terminal 100 according to this exemplary aspect of the present invention includes a main body housing 110, and a sliding housing 120 and a clean back cover 130, both sliding over the main body housing 110 face to face. Although not illustrated, a guide part (not shown) for guiding the movement of a rear plate 121 is provided in the main body housing 110 while facing the rear plate 121 to be described later. The rear plate 121 slides on the guide part according to the amount of sliding of the sliding housing 120 . An elastic member (not shown) is formed to provide the elastic force when the sliding housing 120 makes the sliding between the rear plate 121 and the guide part. Guide grooves 121a are preferably formed in two side surfaces so that movement can be made along the guide part. The clean back cover 130 covers the rear plate 121 of the sliding housing 120 and is closely adhered to an inner side of the main body housing 110.

Still referring to FIG. 5, 8, 9, the clean back cover 130 provided on the sliding housing 120 is exposed to the outside when the sliding housing 120 is slid to an extended (open) position. Both side ends of the clean back cover 130 are preferably engaged with those of the backside of the sliding housing 120. An upper portion of the clean back cover 130 can be attached (such as using, for example, screws) to that of the backside of the sliding housing 120.

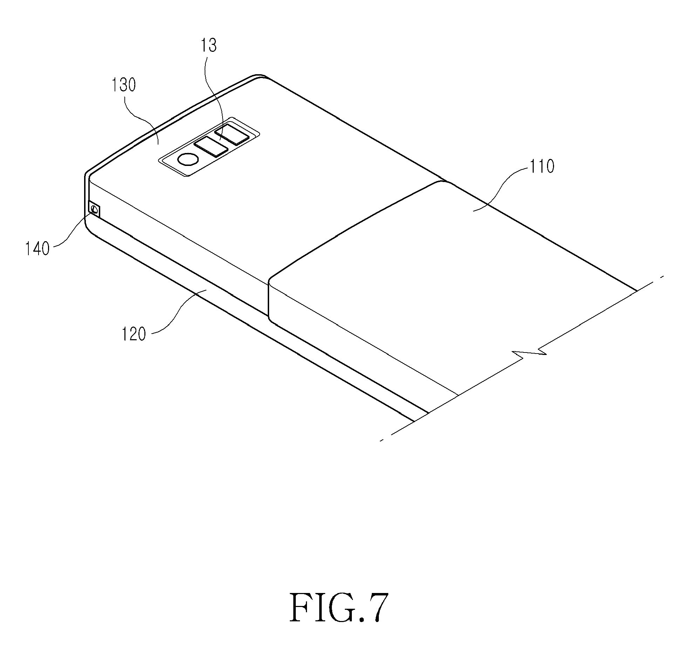

As illustrated in FIGs. 5 to 9, a through-hole 121b, formed inside the sliding housing 120, through which the camera lens module 13 passes is formed into the rear plate 121. Since the camera lens module 13 may be provided, for example, on an upper portion of the backside of the sliding housing 120, the through-hole 121b is formed in an upper portion of the rear plate 121. When the rear plate 121 is coupled to the sliding housing 120, an upper side surface of the rear plate 121 is spaced from the sliding housing 120 by a given length. The camera lens module 13 protrudes into the through-hole 121b corresponding to the spacing. A lens hole 131 for exposing the camera lens module 12, which passes through the rear plate 121 to the outside, is formed in the clean back cover 130. The top surface of the camera lens module 13 is inserted into the lens hole 131 and forms the same level as (i.e. is substantially flush as) that of the clean back cover 130. Transparent glass or an equivalent material can be seated on the lens hole 131 so that an image of an object is captured through a lens of the camera lens module 13 and foreign materials such as dust, etc. can be prevented from coming into the inside.

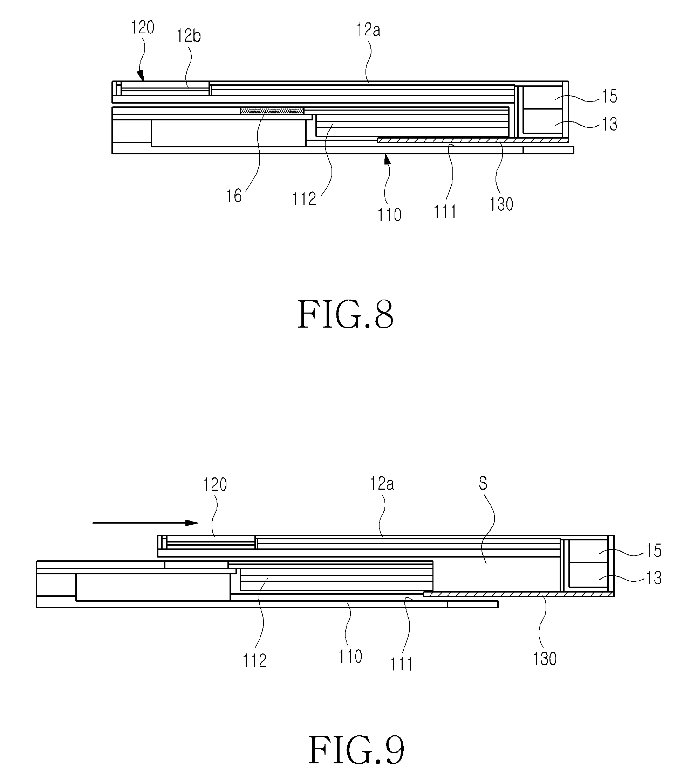

As illustrated in FIG. 8, the clean back cover 130 is closely adhered to an inner side of the main body housing 110 in a state in which the main body housing 110 faces the sliding housing 120. A module 112 provided inside the main body housing 110 is interposed between the rear plate 121 and the clean back cover 130. In general, the module 112 may include, for example, a printed circuit board (PCB), upper components electrically connected to an upper portion of the PCB, and lower components mounted on a lower portion. The clean back cover 130 covers the camera lens module 13 protruded to the backside of the sliding housing 120 and extends in a sliding direction of the sliding housing 120 to form the same surface. Accordingly, the clean back cover 130 can be closely adhered along an inner side of a rear case 111 of the main body housing 110. A space S (shown in FIG. 9) corresponding to a protrusion state of the camera lens module 13 is formed between the rear plate 121 and the clean back cover 130. Since the clean back cover 130 slides into the space S when sliding housing 120 is slid to a closed/retracted position, modules provided inside the main body housing 110 are attached/detached between the rear plate 121 and the clean back cover 130.

As illustrated in FIG. 9, when the sliding housing 120 slides over the main body housing 110, the clean back cover 130 slides over the main body housing 110 and is exposed outside the main body housing 110. Also, the camera lens module 13 is exposed to the outside and the clean back cover 130 covers a sliding module formed on the rear plate 121 and a curvature surface of the rear plate 121. As described above, the space S is formed between the clean back cover 130 and the rear plate 121.

Still referring to FIGs. 8 and 9, when the sliding housing 120 slides over the main body housing 110 so that the module 112 provided inside the main body housing 110 is inserted into the space S, the clean back cover 130 and the rear plate 121 slide in accordance with the sliding of the sliding housing 120 and become far away from the module 112 provided inside the main body housing 110.

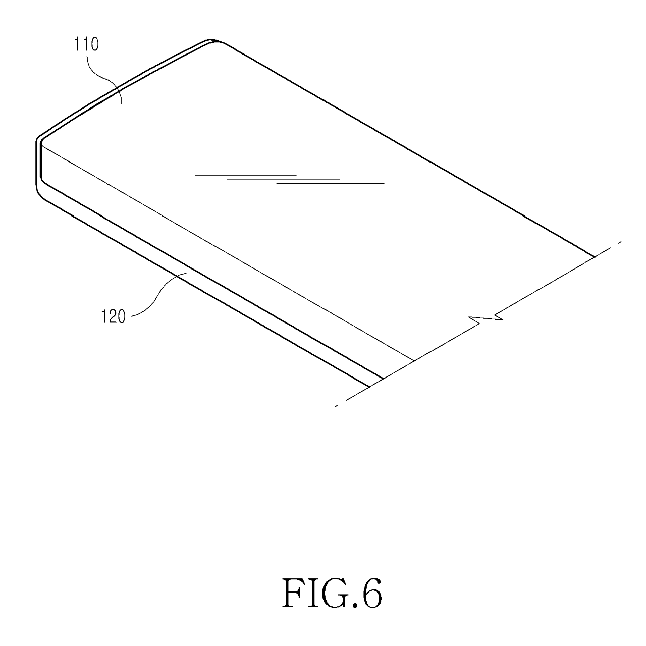

As illustrated in FIGs. 5 and 6, a fastening part 140 for fastening the clean back cover 130 to the sliding housing 120 is provided on the clean back cover 130 and the sliding housing 120. As illustrated in FIG. 5, the fastening part 140 includes a first female member 141, a second female member 142, and a male member 143. The first female member 141 facing the clean back cover 130 is formed in the sliding housing 120. The second female member 142 is provided in the clean back cover 130 and engaged with the first female portion 141. The male member 143 is fastened to the first female member 141 and the second female member 142. Applicant respectfully submits that the exemplary fastening member shown is but one way the clean back cover 130 can be fastened to the sliding housing 120.

Moreover, as illustrated in FIG. 5, the first female member 141 includes a plate 141a and a hole 141b. The plate 141a is engaged with the second female member 142, face to face, and is protruded in a direction vertical to a sliding direction from the side of the sliding housing 120. The hole 141b formed in the plate 141a is coupled to the first female member 141 by the male member 143. As illustrated in FIGs. 5 and 6, the second female member 142 is made of a fastening hole, which is engaged with the hole 141b so as to fasten the male member 143. Although not illustrated, since the fastening part 140 is exposed to the outside when the sliding housing 120 makes a sliding, a hole cover member for covering the fastening part 140 may be provided. A groove is formed around the fastening hole 142 and the hole cover member is engaged with the groove so that a position of the fastening part is not exposed to the outside.

The operation of the sliding-type portable terminal having the above-described structure according to an exemplary embodiment of the present invention will now be described in detail with reference to FIGs. 5 to 9.

As illustrated in FIG. 8, in a state in which the sliding housing 120 is engaged with the main body housing 110, the clean back cover 130, which is closely adhered to an inner side of the main body housing 110, is formed to extend in a sliding direction. In this case, the module of the main body housing 110 is seated between the clean back cover 130 and the rear plate 121. In this state, when the sliding housing 120 makes a sliding, the clean back cover 130 closely adhered to the inner side of the main body housing 110 is exposed to the outside. At this time, the camera lens module 13 provided on an upper portion of the clean back cover 130 disposed on the backside of the sliding housing 120 is exposed to the outside. An empty space S corresponding to a length of the camera lens module 13 protruded to the backside of the sliding housing 120 is formed between the rear plate 121 and the clean back cover 130.

Since the clean back cover 130 covers the surface of the rear plate 121 when the sliding housing 120 is slid to an extended/open position, the backside of the rear plate 121 is not exposed to the outside and the guide groove 121a formed in the rear plate 121 is not exposed to the outside. Accordingly, the backside stays clean even after the sliding-type portable terminal 100 is slid to the extended/open position. Since the clean back cover 130 is closely adhered to the inner side of the main body housing 110, it is difficult for foreign materials to get inside the portable terminal. Also, even when the sliding housing 120 is slid, a sense of unity of the sliding housing 120 can be improved and a sense of unity of the backside of the sliding housing 120 and the backside of the main body housing 110 can be further improved, by providing the clean back cover 130 closely adhered to the inner side of the main body housing 110.

While the invention has been shown and described with reference to a certain preferred exemplary embodiments thereof, it will be understood by those skilled in the art that various changes in form and details may be made therein without departing from the spirit and scope of the invention as defined by the appended claims. For example, the clean back cover 130 is provided as one integrated plate. Alternatively, the clean back cover 130 may be separated and provided to improve the fabrication process, the mechanical strength and the aesthetics thereof.

In the sliding-type portable terminal according to the exemplary embodiment of the present invention, the external appearance of the backside of the portable terminal is kept clean by covering a rear plate of a sliding housing, providing a clean back cover closely adhered to an inner side of a main body housing when the sliding housing is slid, and covering a guide groove formed in the rear plate or a curvature surface of the rear plate. Foreign materials such as dust, etc. can be prevented from coming into the main body housing and the sliding housing through the guide groove and an aesthetic sense of the sliding-type portable terminal can be improved, by preventing the guide groove formed in the rear plate from being exposed to the outside when the sliding housing makes a sliding. Foreign materials can be prevented from coming into the inside by closely adhering the clean back cover to the inner side of the main body housing and by closely adhering an end of the clean back cover extended to an upper portion of the sliding housing to the inner side of the main body housing even when the sliding is made. When a camera lens module is exposed to the outside according to sliding of the sliding housing, a sense of unity with the sliding housing can be improved by providing the camera lens module on the clean back cover inside the sliding housing. A sense of unity of the backside of the portable terminal can be improved by covering the camera lens module with the clean back cover extended and formed in a sliding direction.

## Claims

1. A sliding-type portable terminal (100) comprising:
a main body housing (110);
a sliding housing (120) for sliding from a retracted position to an extended position, said sliding housing (120) being slidably disposed on the main body housing (110) while facing the main body housing and having a rear plate (121) that slides in correspondence with the sliding housing (120),
a clean-back-cover (130) arranged on the sliding housing (120) and connected to an inner side of the main body housing (110), for covering the rear plate (121) of the sliding housing (120), the clean-back-cover (130) being exposed to an exterior environment when the sliding housing (120) is slid into an extended position.

2. The sliding-type portable terminal of claim 1, wherein the clean-back-cover (130) is adhered to the sliding housing (120).

3. The sliding-type portable terminal of claim 1, wherein a through-hole formed inside the sliding housing (120), through which a camera lens module passes, is formed in the rear plate (121), said clean-back-cover (130) having a lens hole therein for exposing the camera lens module passing through the rear plate (121) to the exterior environment, and a top surface of the camera lens module being positioned into the lens hole and to be substantially flush with a surface of the clean-back-cover (130).

4. The sliding-type portable terminal of claim 3, wherein the clean-back-cover (130) is adhered to the inner side of the main body housing (110) in the retracted position in which the main body housing faces the sliding housing (120), and further comprising a module arranged inside the main body housing (110) that is attached between the rear plate (121) and the clean-back-cover (130).

5. The sliding-type portable terminal of claim 4 further comprising a sliding module formed on the rear plate (121), wherein when the sliding housing (120) slides over the main body housing (110) to the extended position, the clean-back-cover (130) slides over the main body housing and the main body housing (110) and the camera lens module are exposed to the exterior environment, the clean-back-cover (130) covering the sliding module formed on the rear plate (121) and a curvature surface of the rear plate (121).

6. The sliding-type portable terminal of claim 5, further comprising a fastening part (140) for fastening the clean-back-cover (130) to the sliding housing (120).

7. The sliding-type portable terminal of claim 6, wherein the fastening part includes:
a first female member (141) formed in the sliding housing (120) and facing the clean-back-cover (130);
a second female member (142) formed in the clean-back-cover (130) and engaged with the first female member (141); and
a male member (143) fastened to the first and second female members.

8. The sliding-type portable terminal of claim 7, wherein the first female member includes:
a plate (141a) protruding in a direction substantially vertical to a sliding direction from a side surface of the sliding housing (120) and engaged with the second female member (142) face-to-face; and
a hole (141b) formed in the plate (141a) and coupled to the first female member (141) by the male member (143).

9. The sliding-type portable terminal of claim 8, wherein the second female member (142) includes a fastening hole (142) to which the male member (143) is fastened while engaging with the hole of the first female member (141).

10. The sliding-type portable terminal of claim 1, wherein the sliding housing (120) includes guide grooves (121a).
